# EUROPEAN PATENT APPLICATION

(11) **EP 0 790 001 A1**
(43) Date of publication of application: **20.08.1997**
(21) Application number: 97102604.2
(22) Date of filing: 18.02.1997
(51) Int. Cl.: A01N 43/58

(54) **Herbicidal combinations**

(30) Priority: 19.02.1996 GB 9603446
(71) Applicant: Novartis AG, 4058 Basel (CH)
(72) Inventor: Neuhauser, Wolfgang, 3382 Loosdorf (AT); Schneider, Rudolf, 4123 Allschwil (CH)

(57) **Abstract**

This invention relates to an improved method of combatting weeds with 3-phenyl-4-hydroxy-6-chloropyridazine in association with an appropriate amount of agriculturally acceptable adjuvants, and to novel compositions comprising 3-phenyl-4-hydroxy-6-chloropyridazine and appropriate amounts of agriculturally acceptable adjuvants.

## Description

The invention relates to an improved method of combatting weeds with 3-phenyl-4-hydroxy-6-chloropyridazine (Compound I) and novel compositions comprising Compound I.

DE-OS 21 29 109 discloses phenylpyridazine compounds, including Compound I, their preparation and use as herbicides. It is also stated in DE-OS 21 29 109 that the phenylpyridazine compounds of the invention may be used in combination with a non-phytotoxic oil, and that this may increase their herbicidal activity. The DE-OS 21 29 109 does however not disclose any specific example of a phenylpyridazine with a non-phytotoxic oil. Compound I has never gained commercial interest in view of the extremely high application rate ( 2 kg/ha in greenhouse test, and 10 kg/ha or more in field test ) required to secure effective herbicidal control.

Compound I is particular indicated for use as a postemergence herbicide in many agricultural crops for control of annual broadleaf weeds. Examples of crops tolerant to Compound I include maize (zea mays), cereals, cabbages, peanuts, rape peas, onion, garlic, leek, poppies, sorghum, lucerne clover, asparagus, chickpeas, perennial grasses and cultivated grasses.

Several attempts have been made to improve the herbicidal efficacy of Compound I. Thus, it has been proposed to employ Compound I in the form of an amino salt (AT-PS 334 133). Another proposal involved the application of Compound I, in free or salt form, in association with from 5 to 20 kg urea per hectare (AT-PS 356 966). The proposed solutions did not result in commercially acceptable products.

It has now been found that it is possible to substantially enhance the herbicidal activity of Compound I in the field, if said Compound I is applied in association with appropriate amounts of agriculturally acceptable adjuvants.

The agriculturally acceptable adjuvant can be used in conjunction with Compound I as a tank mix or incorporated in agriculturally acceptable formulations of Compound I. Typical examples of agriculturally acceptable formulations include wettable powders, suspension concentrates, oil flowables, water dispersible granules, soluble concentrates, emulsifiable concentrates and the like.

### Definitions

For clarity, the following definitions are given:

The term agriculturally acceptable adjuvant (hereinafter designated adjuvant) as used herein refers to any agriculturally acceptable substance or mixture added to a formulation of an herbicidal active ingredient (a.i.) and/or used in tank-mix with an herbicidal active ingredient to increase its herbicidal potency resp. to improve its efficacy on target weeds, while maintaining crop selectivity. Examples of adjuvants are penetrating agents, spreaders/stickers (adhesives) and wetting agents which improve wetting and coverage of the leaves by a spray liquid containing the herbicidal active ingredient (as distinct from wetting agents that help a wettable powder, water dispersible granule or suspension concentrate to get quickly wetted when added to water in a spray tank or tank mix, thus acting as an inert formulation aid ).

In principle, any agriculturally acceptable adjuvant will be suitable for use in the method of the invention.

The term agriculturally acceptable penetrating agent (for brevity designated penetrating agent) refers to any adjuvant which enhances penetration of the active ingredient through the cuticle of plants.

The terms agriculturally acceptable spreaders, stickers and adhesives as used herein refer to any adjuvant improving spreading of the spray broth on the leaf surface and improving after drying rain fastness of the spray deposit.

The terms agriculturally acceptable inert formulation aids (for brevity designated inert ingredients) refers to ingredients giving to the formulation the desired physico-chemical properties including shelf life (storability) and applicability. They include wetting agents (when acting to secure homogenous distribution of a herbicidal formulation in a tank), dispersing agents, thickeners, antifreezing agents, inert carriers, inert diluents.

The term agriculturally acceptable dispersing agents (for brevity designated dispersing agents) as used herein refers to inert ingredients of *inter alia* wettable powders, water dispersible granules and suspension concentrates preventing small water-insoluble particles in formulations to agglomerate. Dispersing agents are absorbed on the surface of said water-insoluble particles and keep them apart for example by electrostatic or steric forces. They are in general polymeric, anionic or non-ionic watersoluble substances that do not substantially lower the surface tension and have no direct effect on the herbicidal efficacy.

The term agriculturally acceptable emulsifier (for brevity designated emusifier) as used herein refers to a surface active substance ("Surfactant") which makes a water-insoluble liquid to form an agriculturally acceptable emulsion when mixed with water.

### Description

The surfactant content in conventional herbicidal applications is in general low: wettable powders (WP) suspension concentrates (SC), and water dispersible granules (WG) do for example typically contain ca. 1 to 5 % by weight of wetting agent and 2 to 10 % by weight of dispersing agent in association with from 10 to 90 % by weight of active ingredient. Conventional soluble concentrates (SL) in general contain from 0 to 2 % by weight of wetting agent in association with from 10 to 60 % by weight of active ingredient. Emulsifiable concentrates typically contain from 3 to 15% by weight of emulsifiers, from 0 to 90% by weight of solvents and from 10 to 80% by weight of active agent.

A typical example of a conventional application form of Compound I is a composition consisting of 20% by weight of Compound I, 70% by weight of kaolin and 10% of the dispersing agent sodium oleyl-methyl-tauride (as disclosed in example 5 of DE-OS 21 29 109).

Such conventional herbicidal formulations apply in general not more than from 50 to 200 g of an aggregate amount of wetting agent and dispersing agent per hectare.

It has now been found, that it is possible to substantially increase the herbicidal efficacy of Compound I by applying said Compound I in association with one or more adjuvants at a rate which is higher than the conventional application rate for surfactants. Typical application rates of adjuvants capable of substantially enhancing the herbicidal effect of Compound I are in the range of from 0.25 to 3.0 kg, preferably of from 0.4 to 3.0 kg adjuvant per hectare. The examples hereinafter illustrate the particularly positive effect of application rates of 0.5 kg, 1.0 kg and 1.5 kg adjuvant resp. per hectare on the herbicidal activity of Compound I. It will be appreciated that the upper limit for the application rate of the adjuvant is in fact open ended and primarily determined by economical and environmental considerations. In general, such enhanced application rate of adjuvant will allow an increase of the herbicidal efficacy of Compound I, and therefore a reduction of the application rate of Compound I necessary to attain satisfactory herbicidal control when applied in conventional formulations form, by no less than a factor 3, often by a factor in the range of from 3 to 30, or even more.

The invention provides a method of combatting weeds with Compound I in association with one or more adjuvants, characterized in that the one or more adjuvants are applied at an aggregate rate per hectare sufficient to increase the herbicidal efficacy of Compound I when used in conventional application form by no less than a factor 3.

The invention further provides a method of combatting weeds with Compound I in association with one or more adjuvants, characterized in that the one or more adjuvants are applied at an aggregate rate per hectare sufficient to allow an acceptable control of annual broadleaf weeds with Compound I at an application rate of from 0.25 to 0.75 kg per hectare.

Preferably the application rate of adjuvant(s) will be selected such that the herbicidal control obtained with Compound I is comparable with that obtained with a herbicidally effective amount of the commercial product pyridate.

The invention further provides a method of combatting weeds with Compound I, characterized in that 0.25 to 0.75 kg of Compound I are applied in association with one or more adjuvants in an aggregate adjuvant amount of from 0.25 to 3.0 kg adjuvant per hectare of weed locus.

The invention further provides herbicidal compositions comprising Compound I and one or more agriculturally acceptable adjuvants in an aggregate amount of adjuvant capable of enhancing the herbicidal effect of Compound I by at least a factor 3. Typical compositions according to the invention comprise Compound I : adjuvant in a weight ratio in the range of from about 3:1 to about 1:12, preferably of from about 1:1 to about 1:12.

Examples of agriculturally acceptable adjuvants particularly suitable for use in the method of the invention include:
- non-ionic surfactants, such as ethoxylated or ethoxylated and propoxylated, linear or branched, saturated or unsaturated fatty alcohols, e.g. oleic alcohol ethoxylated with 1 to 8 moles ethylene oxide, branched C₁₄ and C₁₅ fatty alcohols ethoxylated with 3 to 8 moles ethylene oxide, unbranched C₁₂ to C₁₄ fatty alcohols, ethoxylated and propoxylated ; e.g. GENAPOL 0-050 (Hoechst), LUTENSOL A05 (BASF) LUTENSOL T05 (BASF), LUTENSOL A4 (BASF), PLURAFAC LF 220 (BASF) MARLOX FK 86 (Huels);
- ethoxylated or ethoxylated and propoxylated alkyl or alkylarylphenoles, such as nonylphenol ethoxylated with 4 to 8 moles ethylene oxide; e.g. ARKOPAL N-060 (Hoechst), SOPROPHOR 497/P (Rhône-Poulenc), SOPROPHOR BSU (Rhône-Poulenc);
- ethoxylated or ethoxylated and propoxylated fatty acids, such as oleic acid ethoxylated with 5 to 7 moles ethylene oxide; e.g. SOPROPHOR A (Rhône-Poulenc), MARLOSOL 017 (Huels);
- agriculturally acceptable oils improving the herbicidal efficacy on target weeds e.g. paraffinic oils, vegetable oils and esters thereof, such as rape seed oil and rape seed oil methyl ester;
- anionic surfactants such as sulfosuccinates, fatty alcoholpolyalkoxy ether sulfates and fatty alcohol polyalkoxyether carboxylates, e.g. GEROPON CYA/DEP (Rhône-Poulenc) GENAPOL LRO (Hoechst), MARLOWET 1072 (Huels).

The efficacy of adjuvants can be established by standard tests, e.g. by determining the herbicidal effect of Compound I in the presence of different amounts of adjuvants in greenhouse tests or by determining the % of Compound I - optionally radiolabelled - capable of being washed off from treated leaves after a given time, following application in association with different amounts of adjuvant.

The latter test will give an idea of the suitability of the adjuvant as penetrating agent. The penetrating effect will of course depend on the particular weeds to be combatted and the relative amount of penetrating agent employed. Whilst it will be desirable to achieve a substantial overall increase of penetration and herbicidal activity, it will for practical purposes be appropriate to give special weight to the results with particular target weeds, i.e. weeds considered to be most problematic in a given locus or crop locus and in a particular area. For selective use of Compound I in grassy crops such as maize (zea mays), in Europe, this will for example be Chenopodium species, Amaranthus species and/or Solanum species.

Typical examples of adjuvant suitable for use in the invention will increase penetration of Compound I into the weeds, in particular in major weeds from ca. 10 % a.i. or less, to 70 % or more (as established 4 to 7 days after application), provided the adjuvant (penetrating agent) is applied at rates in the range corresponding with from 0.25 to 3.0 kg per hectare. This is illustrated by Example 4 hereinafter.

Preferably the adjuvants suitable for use in the method of the invention will in addition to a good activity as penetration agent, have good adhesive and/or wetting properties. It will however be appreciated that it is possible to use a combination of 2 or more adjuvants each having one or more of the desired penetrating, adhesive and leave wetting properties. Thus it may be indicated to add to a penetrating agent of choice an adhesive and/or wetting agent to improve the adhesive properties and the spreadability of the formulation or tank mix comprising Compound I.

Particularly appropriate adjuvants for use in the method of the invention include non-ionic surfactants with an HLB-value of from 8 to 16 such as unbranched or branched ethoxylated C₄-C₁₈alcohols optionally propoxylated, anionic surfactants selected from the group consisting of sulfosuccinates, fatty alcohol polyalkoxyether sulfates, fatty alcohol polyalkoxyether carboxylic acid, fatty alcohol polyalkoxy phosphates and agriculturally acceptable salts thereof. The HLB-value specified herein will be determined according to "The HLB SYSTEM, a time-saving guide to emulsifier selection", ICI Americas Inc., Wilmington, Delaware 19897, USA, (1984); Chapter 7, pages 18 and 19 or "Surfactant Systems, their Chemistry, Pharmacy and Biology", Atwood, D. & Florence,A.T., Chapman & Hall, London, (1983), page 471.

As stated hereinbefore the adjuvant may be incoporated in formulations comprising Compound I as an active ingredient, or be used as a tank mix. It will be appreciated that it is also possible to employ conventional formulations comprising Compound I and one or more adjuvants and to add adjuvant in a tank mix in such an amount that no less than 0.25 kg, preferably no less than 0.4 kg, more preferably no less than 0.5 kg adjuvant are applied per hectare weed or crop surface to be treated .

Typical agriculturally acceptable formulations suitable for use according to the invention and comprising Compound I and one or more adjuvants have a composition in the ranges given in Table I, wherein % are by weight:

**TABLE I**

| | **WP**^{**(1)**} | **SC**^{**(2)**} | **OF**^{**(3)**} | **WG**^{**(4)**} | **SL**^{**(5)**} | **EC**^{**(6)**} |
|---|---|---|---|---|---|---|
| Compound I | 10-50 % | 10-50 % | 10-40 % | 10-40 % | 10-50 % | 10-50 % |
| Adjuvant | 10-50 % | 10-50 % | 10-40 % | 10-40 % | 10-50 % | 10-50 % |
| Oil (vegetable or mineral) | - | - | 10-70 % | - | - | 0-30 % |
| Wetting agent∗ | 1-3 % | 1-3 % | - | 1-3 % | - | - |
| Dispersing agent | 2-10 % | 2-10 % | - | 1-10 % | - | - |
| Carrier | 10-50 % | - | - | 10-60 % | - | - |
| Solvent (water-miscible) | - | 10-50 % | - | - | 0-50 % | 20-70 % |
| Water - | - | 0-50 % | - | - | 10-60 % | - |

| | | | | | | |
|---|---|---|---|---|---|---|
| ∗ to improve wetting in water (in the spray tank) | | | | | | |
| (1) wettable powder | | | | | | |
| (2) suspension concentrate | | | | | | |
| (3) oil flowable | | | | | | |
| (4) water dispersible granule | | | | | | |
| (5) soluble concentrate | | | | | | |
| (6) emulsifiable concentrate | | | | | | |

In all these formulations, the content of Compound I and adjuvant are conveniently adjusted such that the weight ratio Compound I: adjuvant is in the range of from 3 : 1 to 1 : 12, although additional adjuvant may be added as a tank mix to secure that the desired amount of not less than 0.25 kg adjuvant is applied per hectare crop or weed locus.

It will be appreciated that Compound I may be in free acid form or in agriculturally acceptable salt form, e.g. alkali metal (for example the Na or K salt form) or amine salt (for example the tri-n-octylamine salt) form. Such salt form is *inter alia* indicated for use in soluble concentrates. Amine salts may also be used in emulsifiable concentrates. Salts of Compound I may be obtained in conventional manner from Compound I in free form and vice versa.

It will also be appreciated that the solvents to be employed in the emulsifiable concentrates will conveniently be organic polar solvents such as N-methylpyrrolidone and dimethylsulfoxide. The adjuvant employed in ECs of the invention will conveniently act as emulsifier.

Preferred formulations according to the invention include suspension concentrates, oil flowables and soluble liquids .

When applied in association with no less than 0.25 kg agriculturally acceptable adjuvant per hectare, satisfactory herbicidal activity will be attained with from 0.25 to 0.75 kg, in many cases from ca. 400 to 600 g Compound I per hectare in the field, resp. with ca. 60 to 100 g Compound I per hectare in the greenhouse.

It will be appreciated that it will be possible to combine the compositions according to the invention which comprises Compound I and an agricuturally acceptable adjuvant, with other herbicidal agents, which may widen its spectrum of activity or even further enhance the herbicidal activity of Compound I. Typical herbicides, indicated for use in association with the combination of the invention include herbicidal compounds known to be suitable for use in combination with pyridate such as dicamba, triazines such as atrazine, terbuthylazine, simazine, cyanazine, propazine; chloroacetamides such as dimethenamid, metolachlor, alachlor, acetochlor, propachlor including the optical isomers of such chloroacetamides, especially the S-forms like for example S-metolachlor; triketones such as sulcotrione; sulfonylureas such as rimsulfuron, thifensulfuron, nicosulfuron, triasulfuron, amidosulfuron, primisulfuron, prosulfuron, oxasulfuron, chlorsulfuron; imidazolinones such as imazapyr, imazamethabenz, imazaquin, imazethapyr; sulfonamides such as flumetsulam, metosulam; hydroxybenzonitriles such as ioxynil, bromoxynil, both in salt form or as octanoate esters; dinitroaniline herbicides such as pendimethalin; phenoxy alcanoic acids such as 2,4-D, 2,4-DP, 2,4-DB, MCPA, MCPP; phenylureas such as chlorotoluron, metoxuron, isoproturon, fluometuron; and bentazone.

The particular choice of herbicide(s) for use in association with composition of the invention will depend on the intended use, i.e. the weeds to be combatted and, where selective weed control is intended, the particular crop against which tolerance is desired.

Typical examples of active herbicidal ingredients suitable for use in combination with the composition of the invention in maize (corn) are dicamba, metolachlor, dimethenamid, bentazone, atrazine, terbuthylazine, bromoxynil, sulcotrione, nicosulfuron, rimsulfuron, prosulfuron, flumetsulam, metosulam, pendimethalin. Most preferred are combinations with dicamba, metolachlor, atrazine, or terbuthylazine

Typical examples of active herbicidal ingredients suitable for use in combination with the composition of the invention in cereals are amidosulfuron, chlorsulfuron, dicamba, metolachlor, dimethenamid, imazamethabenz, ioxynil, bromoxynil, chlorotoluron, isoproturon, 2,4-D, 2,4-DP, MCPA, MCPP, pendimethalin, flumetsulam, metosulam, bentazone. Most preferred are combinations with dicamba or metolachlor.

The invention also provides herbicidal compositions of Compound I in association with one or more herbicides and one or more agriculturally acceptable adjuvants, characterised in that they comprise in one unit dose suitable for treatment of 1 hectare of weed locus from 0.25 to 0.75 kg of Compound I, 0.2 to one time the conventional application rate of any additional herbicide and an aggregate amount of from 0.25 to 3.0 kg of agriculturally acceptable adjuvant.

The invention accordingly provides a method of combatting weeds with an aggregate herbicidally effective amount of Compound I and one or additional more herbicides comprising applying said herbicides in association with 0.25 to 3.0 kg agriculturally acceptable adjuvants per hectare.

The conventional application rate of additional herbicides is known in the art. The following Examples illustrate the invention.

### Example 1

Tables IIa and IIb hereinafter show examples of typical formulations of Compound I with adjuvants incorporated in an amount sufficient to allow acceptable herbicidal control when applied at a rate of from 0.25 to 0.75 kg of Compound I per hectare ; % are by weight.

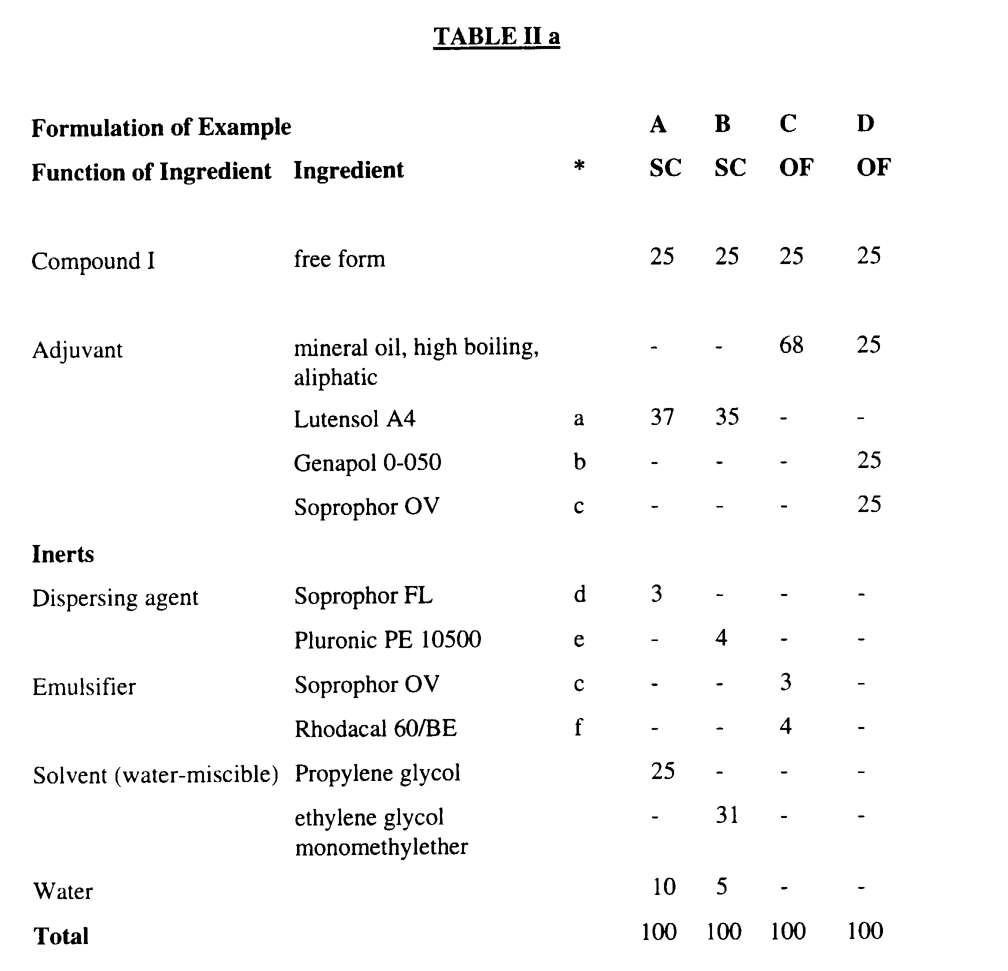

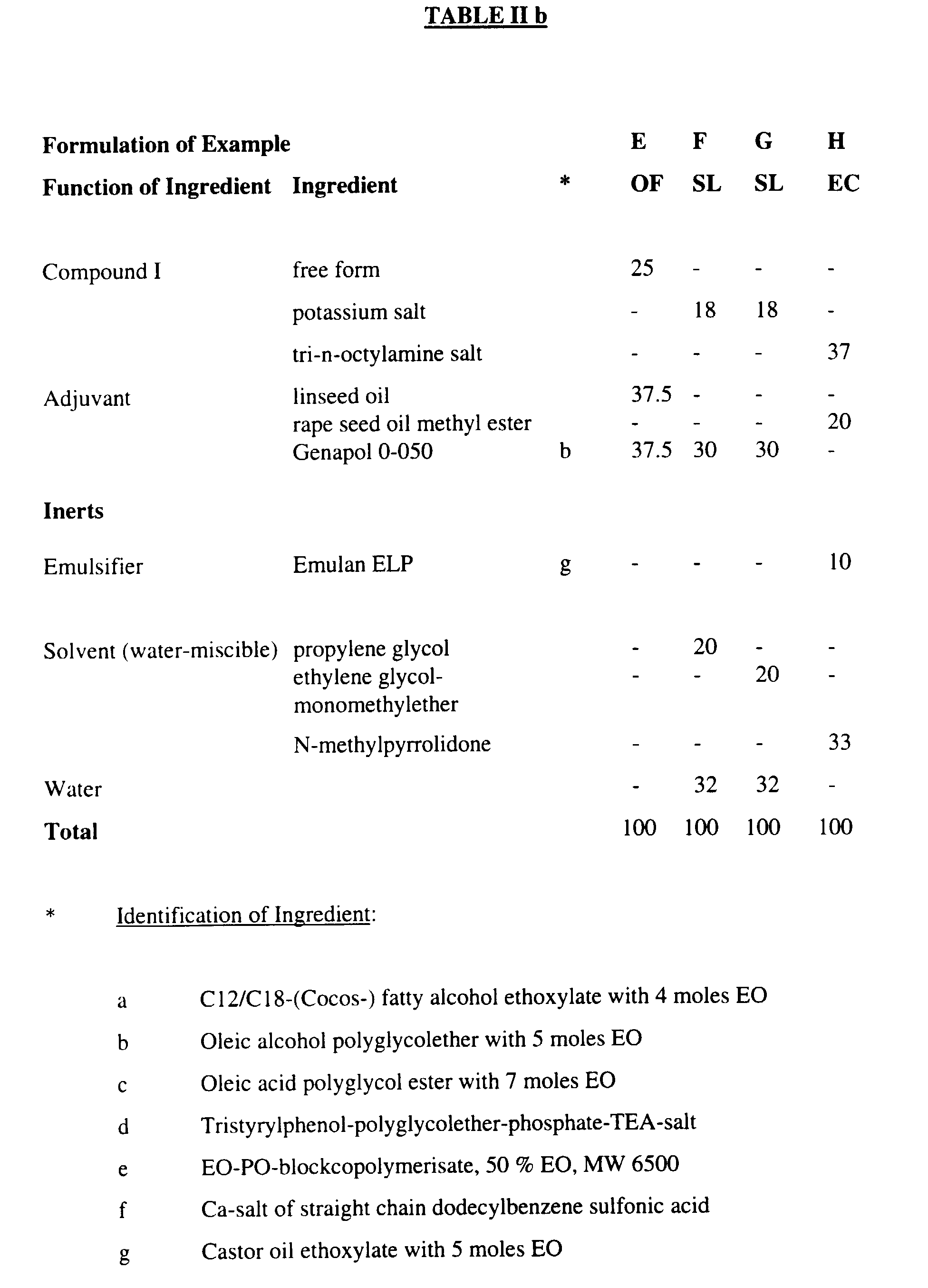

### Example 2

Typical formulations of Compound I without adjuvants.

All figures in percent w/w

**TABLE III**

| | | | | | |
|---|---|---|---|---|---|
| Formulation | | | K | L | M |
| Function of ingredient | Ingredient | ∗ | SL | SL | SC |
| Active ingredient | Compound I | | - | - | 46.0 |
| | Compound I sodium salt | | 5.5 | - | - |
| | Compound I potassium salt | | - | 35.0 | - |
| Dispersing agent | Soprophor FL | d | - | - | 2.0 |
| | Pluronic PE 10500 | e | - | - | 1.5 |
| Anti-freeze | propylene glycol | | - | - | 8.0 |
| Thickener | Kelzan S | j | - | - | 0.2 |
| Water | | | 94.5 | 65.0 | 42.3 |
| | | | | | |
| **Total** | | | 100.0 | 100.0 | 100.0 |

| | | | | | |
|---|---|---|---|---|---|
| ∗ Identification of ingredient | | | | | |
| d Tristyrylphenol-polyglycolether-phosphate-TEA-salt | | | | | |
| e EO-PO-block-copolymerisate, 50 % EO, MW 6500 | | | | | |
| j Xanthan gum | | | | | |

### Example 3

The SL-formulation K according to Example 2 (Table III) was tested in the greenhouse in tank mix with different adjuvants at an application rate corresponding to 60g of Compound I per hectare and 1.5 kg adjuvant per hectare. The herbicidal activity of the various test compositions was determined against Chenopodium (CHE) and Amaranthus (AMA) and compared with that of commercially available formulations of pyridate (Lentagran 450 EC and Lentagran 45 WP) in the greenhouse under standard conditions.

The particular adjuvants and the results are shown in Table IV; 1 means 100 % control and 10 means no activity.

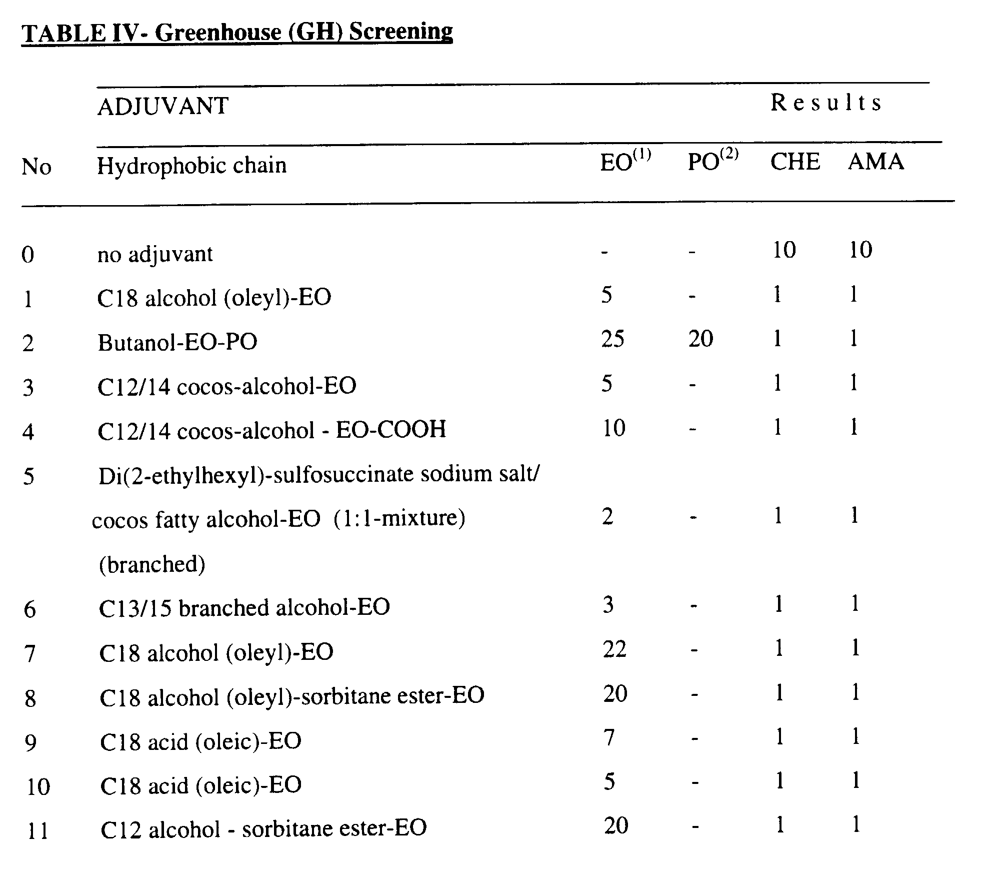

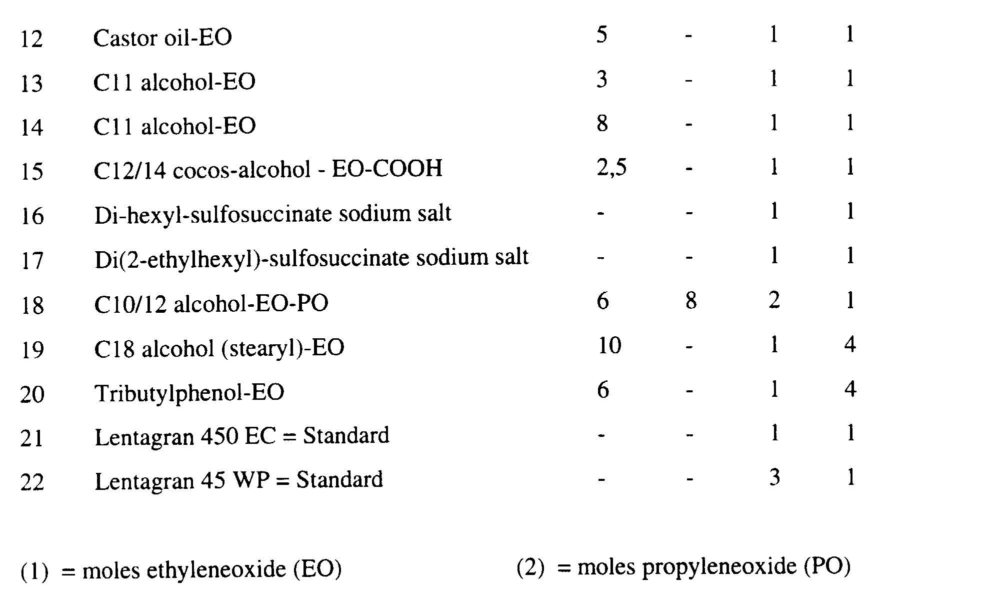

### Example 4

The penetration enhancing effect of adjuvants on Compound I is illustrated by comparing the penetration through the plant cuticle of a conventional herbicidal formulation comprising radiolabelled Compound I (Formulation K of Example 2) with that of the same formulation to which an agriculturally acceptable adjuvant was added in a weight ratio Compound I: adjuvant of 1:2. The penetration of pyridate in the commercial available form of LENTAGRAN WP is shown as a Standard.

The results are shown in Table V

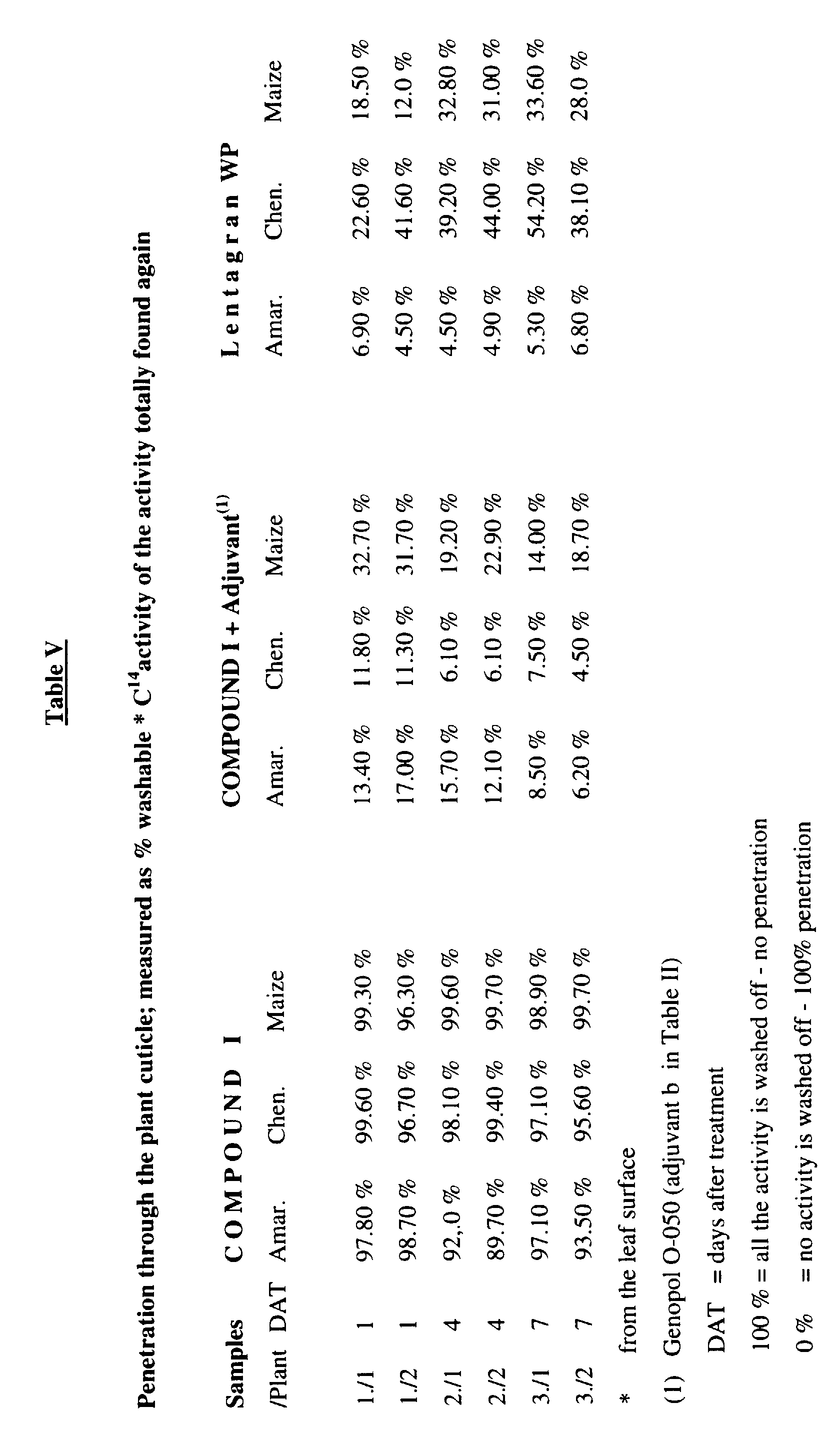

### Example 5

The SC formulation M of Example 2 is tested in the greenhouse with a tank mix with various adjuvants at an application rate corresponding to 80 g of Compound I per hectare and 1.0 kg adjuvant (* 0,. kg adjuvant) per hectare. These results are shown in Table VI

**TABLE VI -**

| | **Greenhouse Screening** | | | | | |
|---|---|---|---|---|---|---|
| **Adjuvant** | | | | **Herb. Control** | | |
| **Hydrophobic chain** | | EO | PO | CHE | AMA | SOL |
| 0 | without adjuvant | - | - | 10 | 10 | 5 |
| 1 | C18 alcohol (oleyl)-EO | 5 | - | 1 | 1 | 1 |
| 2 | ∗C18 alcohol (oleyl)-EO | 5 | - | 3 | 1 | 1 |
| 3 | C13/15 branched alcohol-EO | 3 | - | 1 | 1 | 1 |
| 4 | ∗C13/15 branched alcohol-EO | 3 | - | 3 | 2 | 1 |
| 5 | C12/14 cocos-alcohol-EO | 5 | - | 1 | 2 | 1 |
| 6 | C18 alcohol (oleyl)-EO | 8 | - | 4 | 4 | 1 |
| 7 | C18 alcohol (oleyl)-EO | 15 | - | 1 | 4 | 1 |
| 8 | C18 alcohol (oleyl)-sorbitane ester-EO | 7 | - | 1 | 3 | 1 |
| 9 | C18 acid (oleic)-EO | 5 | - | 1 | 1 | 1 |
| 10 | butanol-EO-PO | 25 | 20 | 2 | 2 | 1 |
| 11 | castor oil-EO | 5 | - | 1 | 3 | 1 |
| 12 | Lentagran 450 EC = Standard | - | - | 1 | 1 | 1 |
| 13 | Lentagran 45 WP = Standard | - | - | 3 | 1 | 1 |
| 1 means 100 % control and 10 means no activity CHE = Chenopodium album AMA = Amaranthus retroflexus SOL = Solanum nigrum | | | | | | |

### Example 6

The SC formulation of Compound I (formulation M of Example 2) and a SL formulation (formulation L of Example 2) are tested in the field in a tank mix with Genapol 0-050 (C 18 alcohol/oleyl/5 EO) at an application rate corresponding to 490 g of Compound I per hectare and 1.0 kg Genapol 0-050 per hectare. These results are shown in Table VII

**TABLE VII -**

| **Field Test** | | | | |
|---|---|---|---|---|
| | **% Weed Control** | | | |
| | **CHE** | **AMA** | **SOL** | **GAS** |
| Compound I SC | 0 | 0 | 15 | 0 |
| Compound I SC + Genapol 0-050 | 86 | 96 | 100 | 93 |
| Compound I K-SL | 0 | 0 | 15 | 0 |
| Compound I K-SL + Genapol 0-050 | 82 | 99 | 99 | 94 |
| Lentagran 450 EC = Standard | 98 | 100 | 100 | 96 |
| CHE = Chenopodium album AMA = Amaranthus retroflexus SOL = Solanum nigrum GAS = Galinsoga parviflora | | | | |

## Claims

1. Herbicidal composition comprising 3-phenyl-4-hydroxy-6-chloropyridazine (Compound I) and one or more agriculturally acceptable adjuvants, in a weight ratio Compound I : adjuvants in the range of from about 3:1 to about 1:12, preferably from about 1:1 to about 1:12 , and preferably in the form of a soluble liquid, wettable powder, water dispersible granule, an oil flowable or a suspension concentrate..

2. Herbicidal composition according to claim 1, characterized in that it comprises in one unit dose suitable for treatment of one hectare weed locus from 0.25 to 0.75 kg of Compound I and an aggregate amount of from 0.25 to 3.0 kg of agriculturally acceptable adjuvant.

3. Herbicidal composition according to claim 2, characterized in that it comprises in one unit dose suitable for treatment of one hectare weed locus one or more additional herbicides, preferably in a weight ratio of.0.2 to one times the conventional application rate of any additional herbicide.

4. Herbicidal composition according to claims 2 or 3, wherein the unit dose suitable for treatment of one hectare weed locus comprises no less than 0.4 kg of agriculturally acceptable adjuvant.

5. Herbicidal composition according to claims 2 to 4, wherein the unit dose suitable for treatment of one hectare weed locus comprises no less than 0.4 kg of Compound I.

6. A compositions of claims 1 to 5, wherein the adjuvant is selected from ethoxylated or ethoxylated and propoxylated, linear or branched, saturated or unsaturated fatty alcohols; ethoxylated or ethoxylated and propoxylated alkyl or alkylarylphenoles; ethoxylated or ethoxylated and propoxylated fatty acids; alkali metal sulfosuccinates, fatty alcohol polyalkoxyether sulfates, fatty alcohol polyalkoxyether phosphates, fatty alcohol polyalkoxyether carboxylates and salts thereof.

7. A composition of claim 6, wherein the adjuvant is selected from the group consisting of non-ionic surfactants having an HLB-value of from 8 to 16 and anionic surfactants, or a mixture thereof.

8. A composition of claim 7, wherein the anionic surfactant is selected from the group consisting of sulfosuccinates, fatty alcohol polyalkoxyether sulfates, fatty alcohol polyalkoxyether phosphates, fatty alcohol polyalkoxyether carboxylic acids, agriculturally acceptable salts thereof and mixtures thereof.

9. A composition of claims 3 to 8, wherein the additional herbicides are selected from the group of dicamba, triazines, bentazone, chloroacetamides, triketones, sulfonylurea, imidazolinones, sulfonamides, hydroxybenzonitriles, dinitroaniline herbicides, phenoxy alcanoic acids, and phenylureas, preferably from dicamba, metolachlor, atrazine, and terbuthylazine.

10. A method of combatting weeds with Compound I in association with one or more adjuvants, characterized in that the one or more adjuvants are applied at an aggregate rate per hectare sufficient to increase the herbicidal efficacy of Compound I when used in conventional application form by no less than a factor 3.

11. A method according to claim 10, characterized in that the one or more adjuvants are applied at an aggregate rate per hectare sufficient to allow an acceptable control of annual broadleaf weeds with an application rate of from 0.25 to 0.75 kg Compound I per hectare, preferably with an application rate in the range of from 0.4 to 0.6 kg per hectare..

12. A method of claims 10 or 11, which comprises applying to the weed locus a herbicidally effective amount of Compound I in association with from 0.25 to 3.0 kg agriculturally acceptable adjuvant per hectare.

13. A method of claims 10 or 11, which comprises applying per hectare locus to be treated an aggregate herbicidally effective amount of Compound I and one or more additional herbicides in association with 0.25 to 3.0 kg agriculturally acceptable adjuvant per hectare.

14. A method of claims 12 or 13, which comprises applying no less than 0.4 kg of adjuvant per hectare.

15. A method of claims 10 to 14, wherein the adjuvant is selected from ethoxylated or ethoxylated and propoxylated, linear or branched, saturated or unsaturated fatty alcohols; ethoxylated or ethoxylated and propoxylated alkyl or alkylarylphenoles; ethoxylated or ethoxylated and propoxylated fatty acids; paraffinic oil; vegetable oils and esters thereof;and mixtures thereof.

16. A method of claims 10 to 15, wherein the adjuvant is selected from the group consisting of non-ionic surfactants having an HLB-value of from 8 to 16 and anionic surfactants, or a mixture thereof.

17. A method of claim 16, wherein the anionic surfactant is selected from the group consisting of sulfosuccinates, fatty alcohol polyalkoxyether sulfates, fatty alcohol polyalkoxyether phosphates, fatty alcohol polyalkoxyether carboxylic acids, agriculturally acceptable salts thereof and mixtures thereof.

18. A method of claims 13 to 17, wherein the additional herbicides are selected from the group of dicamba, bentazone, triazines, chloroacetamides, triketones, sulfonylurea, imidazolinones, sulfonamides, hydroxybenzonitriles, dinitroaniline herbicides, phenoxy alcanoic acids, and phenylureas, preferably from the group dicamba, metolachlor, atrazine, and terbuthylazine.

19. A method of claims 10 to 18, wherein the locus is a maize locus.
